# EUROPEAN PATENT SPECIFICATION

(11) **EP 3 085 627 B1**
(45) Date of publication and mention of the grant of the patent: **23.06.2021**
(21) Application number: 15001168.2
(22) Date of filing: 21.04.2015
(51) Int. Cl.: B64G 1/62, B23K 1/015, B64G 1/64

(54) **SATELLITE COMPRISING A SEPARATION MECHANISM FOR SEPARATION OF A FIRST SATELLITE COMPONENT FROM A SECOND SATELLITE COMPONENT**
SATELLIT MIT EINEM TRENNMECHANISMUS ZUR TRENNUNG EINER ERSTEN SATELLITENKOMPONENTE VON EINER ZWEITEN SATELLITENKOMPONENTE
SATELLITE COMPRENANT UN MÉCANISME DE SÉPARATION PERMETTANT LA SÉPARATION D'UN PREMIER COMPOSANT DU SATELLITE D'UN DEUXIÈME COMPOSANT DU SATELLITE

(43) Date of publication of application: 26.10.2016
(73) Proprietor: Airbus Defence and Space GmbH, 82024 Taufkirchen (DE)
(72) Inventor: Schwarz, Sebastian, 88090 Immenstaad (DE); Diel, Stephen, 88677 Markdorf (DE); von Alberti, Mathias, 88677 Markdorf (DE)
(74) Representative: Schicker, Silvia

(56) References cited:
- WO-A1-2014/045078
- WO-A1-2015/014943
- JP-A- 2010 247 719
- US-A- 3 512 245
- Russell P. Patera ET AL: "The Realities of Reentry Disposal", Proceedings of the AAS/AIAA Space Flight Mechanics Meeting, 1 January 1998 (1998-01-01), XP055203469, Retrieved from the Internet: URL:http://www.globalsecurity.org/space/li brary/report/enviro/reentrypaper.pdf [retrieved on 2015-07-20]
- None

## Description

The invention relates to a satellite comprising a separation mechanism for separation of a first satellite component from a second satellite component.

Atmospheric entry is the movement of an object into and through the gases of a planet's atmosphere from outer space. Atmospheric drag and aerodynamic heating can cause atmospheric breakup capable of completely disintegrating smaller objects. These forces may cause objects with lower compressive strength to explode.

Spacecrafts, such as satellites, are often too big to be completely disintegrated during entry into the earth's atmosphere. To avoid that large pieces of the debris cause damages on earth, in one alternative the spacecraft can be brought down in a controlled manner. However, this procedure requires a significant amount of propellant resulting in significant additional costs of a spacecraft mission. In another alternative, the spacecraft could be fragmented before entering the earth's atmosphere. By fragmenting the spacecraft into smaller pieces a complete burnup in the atmosphere is ensured.

The separation of spacecraft components can be achieved with the help of actuated separation mechanisms. As separation mechanisms, thermal knifes, Frangi-bolts, pyrotechnic mechanisms and electric actuated mechanisms are known. However, known electric actuated separation mechanisms have a complex construction. They require an expensive and complex electric infrastructure on the spacecraft, thus resulting in considerable high costs for testing and verification. Furthermore, electric actuated separation mechanisms degrade with regard to their reliability during time.

It is therefore an object of the present invention to provide a separation mechanism which enables a separation of two satellite components from each other which has a lower complexity and, at the same time, a high reliability.

This object is solved by a satellite according to the features of claim 1. Preferred embodiments are set out in the dependent claims.

As a result, the separation of the two satellite components is achieved by melting a soldered connection by frictional heat that occurs during entry into the earth's atmosphere. Upon entering the earth's atmosphere of the satellite, the first and the second satellite components are heated. This heat or at least part of it will be transferred from the first and a second satellite components to the first and a second structural elements resulting in the melting of the solder. As a result the satellite can be completely disintegrated due to smaller component parts resulting in a burnup of the components in the atmosphere.

As an advantage, the separation mechanism works purely passive. No electric controlling of the separation mechanism is necessary. The suggested separation mechanism has a simple and reliable structure, since a physical effect, i.e. melting of a metallic alloy, is used. Hence, no degradation of reliability will occur over time, independent from the time the spacecraft spent in the orbit.

Nevertheless, the strength of the solder is sufficiently high for transfer of typical mechanical loads within the typical operation temperatures of spacecraft components.

According to a preferred embodiment, the first structural element and a second structural element are made of titanium or titanium alloys. Alternatively, aluminium or alloys thereof can be used. Titanium/titanium and aluminium/aluminum joints can be processed easily in a soldering processes.

According to a further preferred embodiment, at least one of the first connecting surface and the second connecting surface is silver-plated. The silver-plating of the first and/or the second connecting surface may be made by a galvanic process.

To ensure uniform properties of the solder (i.e. solder layer) after having interconnected the first and a second connecting surfaces, the first connecting surface and the second connecting surface are adjusted to each other such that a thickness of the solder (i.e. the solder layer) between the surfaces is uniform. This ensures the required strength during the use of the spacecraft in orbit and the reliability that the solder melts uniform upon entry into earth's atmosphere to separate the two spacecraft components from each other.

It is further preferred that the first connecting surface and the second connecting surface are flat surfaces, i.e. having no curved surface portions.

The invention will be explained in more detail by reference to the accompanying figures.
- Fig. 1: shows a perspective view of a separation mechanism according to the invention where a first and a second structural element are interconnected by means of a solder layer.
- Fig. 2: shows a perspective view of the separation mechanism of Fig. 1 in which the two structural elements are separated from each other after the solder is melted.

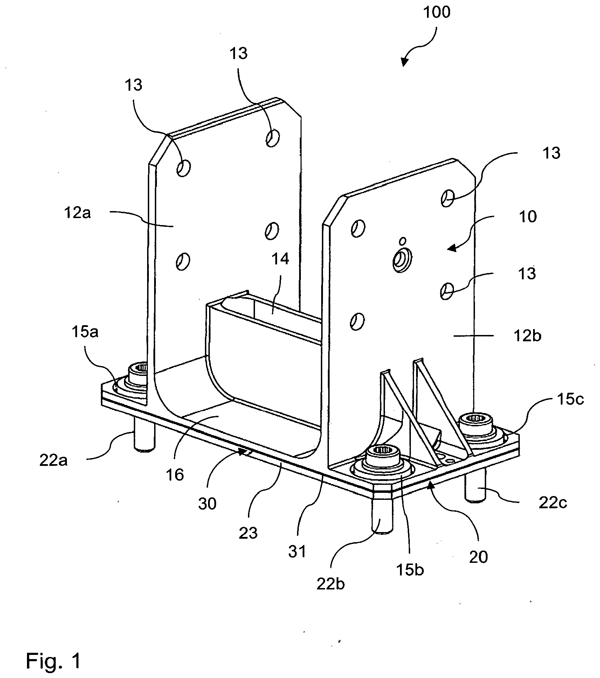

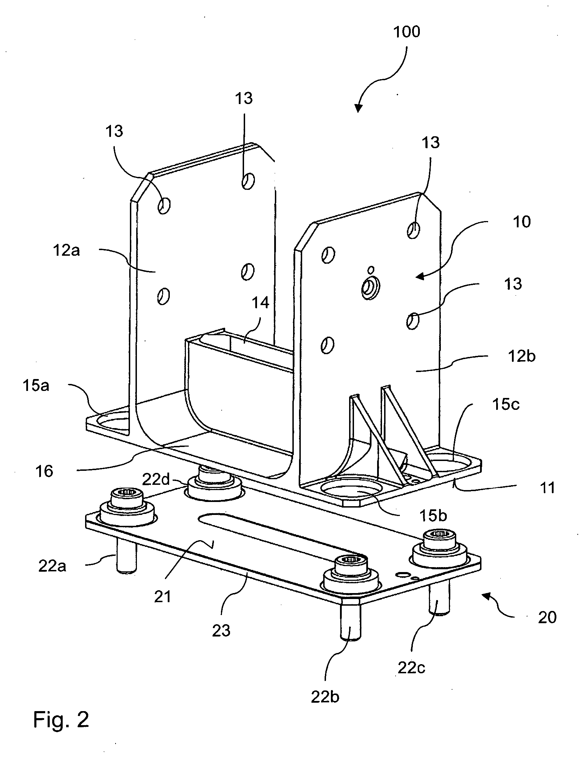

Figs. 1 and 2 show a perspective view of a separation mechanism 100 for separation of a first satellite component (not shown) from a second satellite component (now shown). The separation mechanism 100 comprises a first structural element 10 and a second structural element 20. Fig. 1 shows the separation mechanism 100 in which the first structural element 10 and the second structural element 20 are connected by a connecting means 30 consisting of solder 31. Fig. 2 shows the separation mechanism 100 after the first and a second structural elements 10, 20 have been separated due to the melting of the soldering upon frictional heat during entry of the first and a second structural elements 10, 20 into the earth's atmosphere.

The first structural element 10 consists of a, by way of example only, rectangular base plate 16. The base plate 16 has a first connecting surface 11 which is directed to the second structural element 20. The first connecting surface 11 has a substantially flat surface. The base plate 16 comprises four circular recesses 15a, 15b, 15c (a fourth recess 15d cannot be seen in the perspective view of Fig. 1). By way of example only, two side walls 12a, 12b extend substantially orthogonal to the plane and the flat surface, respectively, of the base plate 16. The side walls 12a, 12b extend in a direction opposite to the second structural element 20. To enhance the rigidity of the first structural element, a crossmember 14 interconnects the side walls 12a, 12b and the base plate 16. The side walls 12a, 12b have a number of recesses 13 therein which enable mechanical fixing of the first satellite component.

It is to be understood that the structure of the first structural element 10 depends on the structure of the satellite component to be connected to the first structural element 10. Hence, the structure of the first structural element 10 could differ from the structure shown in the example.

The second structural element 20 consists of a, by way of example only, substantially rectangular base plate 23. The base plate 23 has a second connecting surface 21 directed to a first structural element 10. Corresponding to the first connecting surface 11, the second connecting surface of the base plate 23 has a flat surface as well. The size and the shape of the base plate 23 correspond to the size and the shape of the base plate 16 of the first structural element 10. At the corners of the base plate 23 four bolts 22a, 22b, 22c, 22d are fixed. Heads of the bolts 22a, 22b, 22c, 22d project through the circular recesses 15a, 15b, 15d of the first structural element 10 (Fig. 1) when the first and the second structural element 10, 20 are interconnected. The bolts 22a, 22b, 22c can be used for mechanical fixing of a second satellite component, which is a payload.

However, it is to be understood that a payload could be mechanical fixed to the first structural element 10 and the satellite component could be fixed to the second structural element 20 as well.

The first and the second structural element 10, 20 are made of titanium or aluminum. The first connecting surface 11 and/or the second connecting surface 21 are silver-plated, in particular by a galvanic silver-plating process. After preparation of the first and the second connecting surfaces 11, 21 with a layer made of silver, the first and the second connecting surfaces 21, 22 are connected by a vacuum vapor phase soldering process. To ensure that the soldering corresponds to the quality needed in space applications, the soldering is tested by an X-ray examination. Additionally, a load testing of the separation mechanism 100 can be conducted. The strength of the soldering (i.e. a solder layer) is sufficiently high for transferring mechanical loads at typical operation temperatures of spacecraft components. If the quality of the interconnection is as desired, no degradation of the interconnection and the functionality of the separation mechanism occurs.

At the end of life of the satellite, the satellite re-enters the earth's atmosphere. As a result, the satellite is slowed down thereby heating up very fast.

Due to the frictional heat the solder melts during the entry into the earth's atmosphere. As soon as the solder loses its strength, the first and the second structural elements 10, 20, each of them being connected to a satellite component, separate from each other due to the air resistance, such that the payload is separated from the satellite.

Due to the smaller size of the satellite components, they can burn up in the atmosphere.

The separation mechanism works purely passive. It does not require electric actuation or controlling in contrast to separation mechanisms known from the prior art.

### Reference list

- 100: separation mechanism
- 10: first structural element
- 11: first connecting surface
- 12a, 12b: side wall
- 13: recess
- 14: crossmember
- 15a, 15b, 15c: recess
- 16: base plate
- 20: second structural element
- 21: second connecting surface
- 22a, 22b, 22c: bolt
- 23: base plate
- 30: connecting means
- 31: solder

## Claims

1. A satellite comprising
- a first satellite component;
- a second satellite component, which is a payload; and
- a passive separation mechanism (100) for separation of the first satellite component from the second satellite component, wherein the passive separation mechanism (100) comprises:
- a first structural element (10) having a base plate (16), wherein the base plate (16) has a first connecting surface (11), wherein the first connecting surface (11) is directly formed on the base plate (16), wherein the first structural element (10) is mechanically fixed to the first satellite component,
- a second structural element (20) having a base plate (23), wherein the base plate (23) has a second connecting surface (21), wherein the second connecting surface (21) is directly formed on the base plate (23), wherein the size and the shape of the base plate (23) of the second structural element (20) corresponds to the size and shape of the base plate (16) of the first structural element (10), wherein the second structural element (20) is mechanically fixed to the second satellite component,
- a connecting means (30) for mechanically connecting the first and the second connecting surfaces (11, 21) and for separating them upon activation;
- wherein the connecting means (30) is solder which interconnects the first and the second connecting surfaces (11, 21), the solder being meltable upon frictional heat occurring during entry of the first and the second structural elements (10, 20) into the earth's atmosphere, wherein the passive separation mechanism (100) is configured to transfer said heat from the first satellite component and the second satellite component to the connecting means (30) for melting the solder of the connecting means (30).

2. The satellite according to claim 1, wherein the first structural element (10) and the second structural element (20) are made of titanium or aluminium or alloys thereof.

3. The satellite according to claim 1 or 2, wherein at least one of the first connecting surface (11) and the second connecting surface (21) is silver-plated.

4. The satellite according to one of the preceding claims, wherein the first connecting surface (11) and the second connecting surface (21) are adjusted to each other such that a thickness of the solder between the surfaces (11, 21) is uniform.

5. The satellite according to claim 4, wherein the first connecting surface (11) and the second connecting surface (21) are flat.

## Patentansprüche

1. Satellit, der umfasst:
- eine erste Satellitenkomponente;
- eine zweite Satellitenkomponente, die eine Nutzlast ist; und
- einen passiven Trennmechanismus (100) zum Trennen der ersten Satellitenkomponente von der zweiten Satellitenkomponente, wobei der passive Trennmechanismus (100) umfasst:
- ein erstes Strukturelement (10) mit einer Grundplatte (16), wobei die Grundplatte (16) eine erste Verbindungsfläche (11) aufweist, wobei die erste Verbindungsfläche (11) direkt an der Grundplatte (16) ausgebildet ist, wobei das erste Strukturelement (10) mechanisch an der ersten Satellitenkomponente befestigt ist,
- ein zweites Strukturelement (20) mit einer Grundplatte (23), wobei die Grundplatte (23) eine zweite Verbindungsfläche (21) aufweist, wobei die zweite Verbindungsfläche (21) direkt an der Grundplatte (23) ausgebildet ist, wobei die Größe und die Form der Grundplatte (23) des zweiten Strukturelements (20) der Größe und der Form der Grundplatte (16) des ersten Strukturelements (10) entspricht, wobei das zweite Strukturelement (20) mechanisch an der zweiten Satellitenkomponente befestigt ist,
- ein Verbindungsmittel (30) zum mechanischen Verbinden der ersten und der zweiten Verbindungsfläche (11, 21) und zum Trennen derselben bei Aktivierung;
- wobei das Verbindungsmittel (30) ein Lot ist, das die erste und die zweite Verbindungsfläche (11, 21) miteinander verbindet, wobei das Lot bei Reibungswärme, die beim Eintritt des ersten und des zweiten Strukturelements (10, 20) in die Erdatmosphäre auftritt, schmelzbar ist, wobei der passive Trennmechanismus (100) so konfiguriert ist, dass er Wärme von der ersten Satellitenkomponente und der zweiten Satellitenkomponente auf das Verbindungsmittel (30) überträgt, um das Lot des Verbindungsmittels (30) zu schmelzen.

2. Satellit nach Anspruch 1, wobei das erste Strukturelement (10) und das zweite Strukturelement (20) aus Titan oder Aluminium oder deren Legierungen bestehen.

3. Satellit nach Anspruch 1 oder 2, wobei die erste Verbindungsfläche (11) und/oder die zweite Verbindungsfläche (21) versilbert ist.

4. Satellit nach einem der vorhergehenden Ansprüche, wobei die erste Verbindungsfläche (11) und die zweite Verbindungsfläche (21) so aufeinander abgestimmt sind, dass eine Dicke des Lots zwischen den Flächen (11, 21) gleichmäßig ist.

5. Satellit nach Anspruch 4, wobei die erste Verbindungsfläche (11) und die zweite Verbindungsfläche (21) eben sind.

## Revendications

1. Satellite comprenant
- un premier composant de satellite ;
- un deuxième composant de satellite, qui est une charge utile ; et
- un mécanisme (100) passif de séparation pour une séparation du premier composant de satellite du deuxième composant de satellite, dans lequel le mécanisme (100) passif de séparation comprend :
- un premier élément structurel (10) ayant une plaque de base (16), dans lequel la plaque de base (16) a une première surface de connexion (11), dans lequel la première surface de connexion (11) est directement formée sur la plaque de base (16), dans lequel le premier élément structurel (10) est mécaniquement fixé au premier composant de satellite,
- un deuxième élément structurel (20) ayant une plaque de base (23), dans lequel la plaque de base (23) a une deuxième surface de connexion (21), dans lequel la deuxième surface de connexion (21) est directement formée sur la plaque de base (23), dans lequel la taille et la forme de la plaque de base (23) du deuxième élément structurel (20) correspondent à la taille et la forme de la plaque de base (16) du premier élément structurel (10), dans lequel le deuxième élément structurel (20) est mécaniquement fixé au deuxième composant de satellite,
- un moyen (30) de connexion pour connecter mécaniquement les première et deuxième surfaces de connexion (11, 21) et pour les séparer à l'activation ;
- dans lequel le moyen (30) de connexion est une brasure qui interconnecte les première et deuxième surfaces de connexion (11, 21), la brasure pouvant être fait fondre par une chaleur de frottement survenant lors de l'entrée des premier et deuxième éléments structurels (10, 20) dans l'atmosphère terrestre, dans lequel le mécanisme (100) passif de séparation est configuré pour transférer ladite chaleur du premier composant de satellite et du deuxième composant de satellite au moyen (30) de connexion pour faire fondre la brasure du moyen (30) de connexion.

2. Satellite selon la revendication 1, dans lequel le premier élément structurel (10) et le deuxième élément structurel (20) sont constitués de titane ou d'aluminium ou d'alliages de ceux-ci.

3. Satellite selon la revendication 1 ou 2, dans lequel au moins une de la première surface de connexion (11) et de la deuxième surface de connexion (21) est plaquée argent.

4. Satellite selon l'une des revendications précédentes, dans lequel la première surface de connexion (11) et la deuxième surface de connexion (21) sont ajustées l'une à l'autre de telle manière qu'une épaisseur de la brasure entre les surfaces (11, 21) est uniforme.

5. Satellite selon la revendication 4, dans lequel la première surface de connexion (11) et la deuxième surface de connexion (21) sont plates.
